# EUROPEAN PATENT SPECIFICATION

(11) **EP 3 564 100 B1**
(45) Date of publication and mention of the grant of the patent: **29.05.2024**
(21) Application number: 18754000.0
(22) Date of filing: 09.01.2018
(51) Int. Cl.: B62D 25/12, B62D 25/10, E05B 83/16, B62D 49/00, E05B 79/20, E05B 83/24

(54) **TRACTOR**
TRAKTOR
TRACTEUR

(30) Priority: 15.02.2017 JP 2017025561
(43) Date of publication of application: 06.11.2019
(73) Proprietor: Yanmar Power Technology Co., Ltd., Osaka City (JP)
(72) Inventor: KOMIYA, Toshitaka, Osaka-shi Osaka 530-8311 (JP)
(74) Representative: Dennemeyer & Associates S.A.
(86) International application number: PCT/JP2018/000156
(87) International publication number: WO 2018/150761

(56) References cited:
- JP-A- H05 139 339
- JP-A- H09 132 169
- JP-A- H09 132 169
- JP-A- 2010 077 787
- JP-U- S 541 863
- JP-U- H0 540 616
- JP-U- H0 540 616
- JP-U- S62 141 866

## Description

### Technical Field

The present invention mainly relates to a tractor having a structure that deters its engine hood from being easily unlocked.

### Background Art

Traditionally, a tractor is provided with a lock unit that deters an engine hood from opening, and a release operation unit configured to release locking of the lock unit. Patent Literatures 1 and 2 (PLT 1, PTL 2) disclose a tractor of this type.

The tractor of PTL 1 has an operation unit (release operation unit) below its engine hood. By a driver manually pulling this operation unit, the engine hood is unlocked to be openable.

The tractor of PTL 2 has a release lever (release operation unit) in the interior of its engine hood. The engine hood is unlocked to be openable by a driver inserting a release member from below the engine hood to operate the release lever.

The tractor of PTL3 comprises an engine hood, a lock and a release operation unit arranged in a column cover, which is connected to the lock unit through a connecting member to allow an operation of releasing locking of the lock unit. A surrounding member is provided to protrude from the column cover.

### Citation List

### Patent Literatures

PTL 1: Japanese Patent Application Laid-Open No. 2011-255695
PTL 2: Japanese Patent No. 5536696
PTL3: JP H09 132169 A

### Summary of Invention

### Technical Problem

Since the engine hood of the tractor of PTL 1 can be unlocked simply by manual operation, an unintended person can easily open the engine hood. Meanwhile, in the tractor of PTL 2, the lock is released by inserting the release member from the underneath of the engine hood into the interior of the engine hood. This requires the driver to perform the unlocking operation of the engine hood in a straining posture.

The present invention is made in view of the above circumstances, and it is a primary object of the present invention to provide a tractor having a structure that can deter an unintended person from easily unlocking the engine hood, while allowing the driver to unlock the engine hood in a non-straining posture.

### Solution to Problem and Advantages

Problems to be solved by the invention are as described above, and next, means for solving the problems and effects thereof will be described.

In an aspect of the present invention, a tractor having the following structure is provided. Namely, the tractor includes an engine hood, a lock unit, a release operation unit, and a surrounding member. The lock unit deters the engine hood from being opened. The release operation unit is arranged in a column cover or a dashboard of a driver seat, and connected to the lock unit through a connecting member to allow an operation of releasing locking of the lock unit. The surrounding member is provided to protrude from the column cover or the dashboard and the surrounding member is a bottomed cylindrical member provided in such a manner as to protrude from the column cover towards the driver seat, and is arranged to cover the periphery of the release operation unit, and surrounds the circumference of the release operation unit so as to disable direct manual operation of the release operation unit, the surrounding member having an opening portion that allows insertion of at least a predetermined release tool, wherein a driver seat side end portion of the surrounding member is opened.

Surrounding the release operation unit with the surrounding member can deter an unintended person from easily unlocking the engine hood. Further, since the release operation unit is provided to the column cover or the dashboard, an driver can unlock the engine hood in a non-straining posture.

The tractor is preferably such that locking of the lock unit is released by pulling the release operation unit in an axial direction of the surrounding member.

This way, the engine hood can be unlocked through a simple operation.

The tractor is preferably such that the surrounding member has a cylindrical shape.

Unlocking the engine hood by pulling the release operation unit only requires a gap that enables insertion of the release tool between the release operation unit and the surrounding member. If the surrounding member has a polygonal shape, the gap between the surrounding member and the release operation unit tends to be large at a corner of the polygonal shape, consequently making manual unlocking easier. However, the gap between the release operation unit and the surrounding member can be made even to a certain extent by making the surrounding member in a cylindrical shape. Therefore, a structure that deters manual unlocking while allowing unlocking by using the release tool can be easily achieved.

The tractor is preferably structured as follows. Namely, the release operation unit has a hook hole that can be hooked by the release tool. An axial direction of the hook hole and the direction in which the surrounding member protrudes are perpendicular to each other.

With the hook hole inside the surrounding member, a finger cannot hook to the hook hole unless the finger is bent inside the surrounding member. Therefore, a structure that deters manual unlocking while allowing unlocking by using a release tool can be easily achieved.

The tractor is preferably structured as follows. Namely, the surrounding member has an attachment slit extended in the direction in which the surrounding member protrudes. A width of the attachment slit is smaller than a width of the release operation unit, but is larger than a width of the connecting member.

With this, the connecting member and the release operation unit can be attached first, and the surrounding member can be attached thereafter. Specifically, when the surrounding member is attached, the release operation unit is pulled to draw out the connecting member, and then the surrounding member can be attached afterward by letting the connecting member pass through the slit of the surrounding member.

### Brief Description of Drawings

[FIG. 1] A side view of a tractor 1 according to one embodiment of the present invention.
[FIG. 2] A perspective view showing surroundings of a dashboard and a steering column.
[FIG. 3] An enlarged perspective view of the vicinity of an unlock unit.
[FIG. 4] A perspective view showing an operation of a release operation unit of the unlock unit by using a release tool.
[FIG. 5] A perspective view of the release tool.
[FIG. 6] A perspective view showing the bottom side of a surrounding member.
[FIG. 7] A perspective view showing attaching of the surrounding member.
[FIG. 8] A perspective view showing an attachment structure of the unlock unit.
[FIG. 9] A side view showing an attachment structure of the unlock unit.
[FIG. 10] A perspective view showing an attachment structure of a support bracket.
[FIG. 11] A perspective view showing an attachment structure of a front frame.
[FIG. 12] A perspective view showing a structure of a lock unit.
[FIG. 13] A front view showing a structure of the lock unit.

### Description of Embodiments

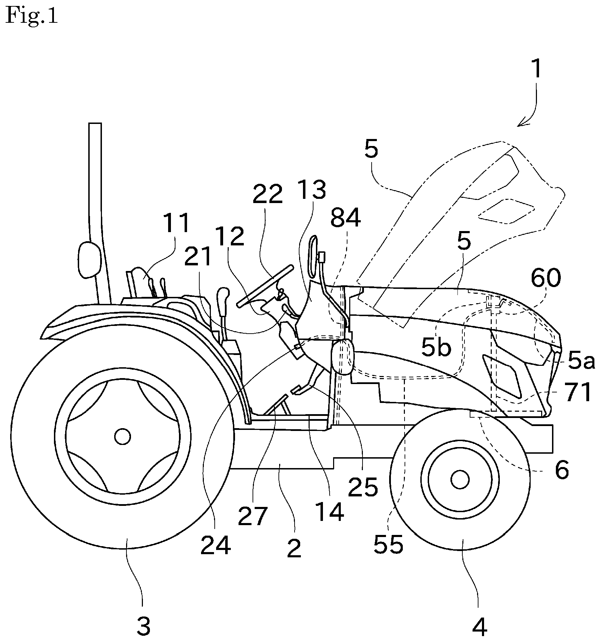

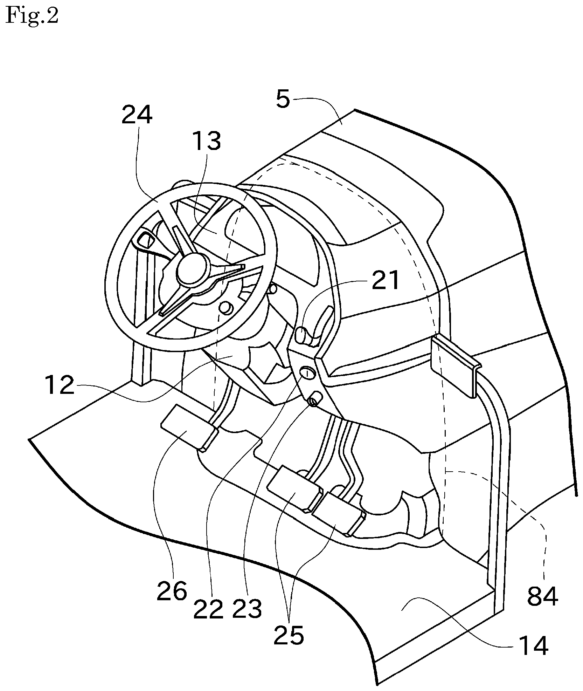

An embodiment of the present invention will be described with reference to the drawings. First, an overall structure of the tractor 1 is described with reference to FIG. 1 and FIG. 2. FIG. 1 is a side view of a tractor 1 according to one embodiment of the present invention. FIG. 2 is a perspective view showing surroundings of a dashboard and a steering column.

As shown in FIG. 1, the tractor 1 has a machine body 2 which is a structure constituted by a main frame and the like. The machine body 2 of the tractor 1 is supported by a pair of right and left front wheels 3 and a pair of right and left rear wheels 4, each of which wheels serves as a running wheel. The machine body 2 is structured such that a work machine is attachable thereto and detachable therefrom. Examples of the work machine include various types of work machines such as tillers, plows, fertilizers, mowers, and seeders.

Above a front portion of the machine body 2 of the tractor 1, an engine hood 5 is arranged. In the interior of the engine hood 5, an engine as a drive source and the like are arranged. Further, in the interior of the engine hood 5, there is a lock unit 60 configured to deter the engine hood 5 from being opened is provided. By releasing locking of the lock unit 60, the engine hood 5 is rotated (opened) about its upper rear end portion as the rotation fulcrum and the interior of the engine hood 5 can be exposed (see dashed-line in FIG. 1).

On a top surface of the machine body 2 behind the engine hood 5, a driver seat 11 on which a driver is seated is arranged. Also, in front of the driver seat 11, a column cover 12 and a dashboard 13 are arranged. The column cover 12 is a cover that covers the steering column. The dashboard 13 is disposed in front of the driver seat 11, and has a meter and the like for indicating a traveling speed and the like. In addition to the meter, the dashboard 13 of the present embodiment has an accelerator lever 21, a key cylinder 22, an unlock unit 23, and the like.

The accelerator lever 21 is an operation unit for increasing the number of revolutions of the engine. The key cylinder 22 is an operation unit for starting the engine. Specifically, by inserting a key of the tractor 1 into the key cylinder 22 and rotating the key, a starter motor is driven and the engine is started. The unlock unit 23 is an operation unit for performing an operation for unlocking the engine hood 5 which is locked by the lock unit 60 (details will be described later). The unlock unit 23 is arranged below the accelerator lever 21 and the key cylinder 22.

Obliquely above the rear of the dashboard 13 and above the column cover 12, a steering wheel 24 for a driver to steer is arranged. Below the steering wheel 24, foot pedals such as a brake pedal 25, a clutch pedal 26, and an accelerator pedal 27 are arranged. The unlock unit 23 is arranged above these foot pedals, and below the steering wheel 24. Below the brake pedal 25 and the clutch pedal 26, a floor 14 is provided for a driver seated on the driver seat 11 to place his/her feet.

Power generated by the engine under the engine hood 5 is transmitted to the rear wheels 4 through a not-shown clutch housing and a not-shown transmission case. This way, the tractor 1 can be moved.

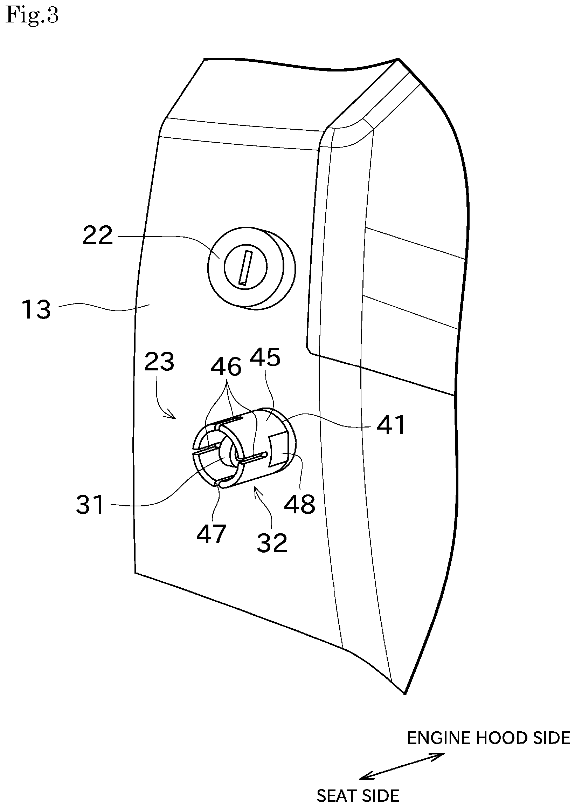

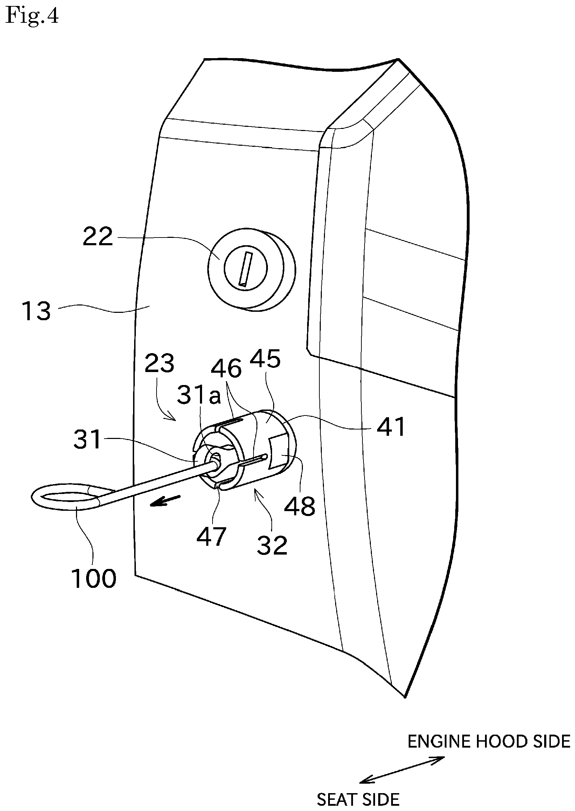

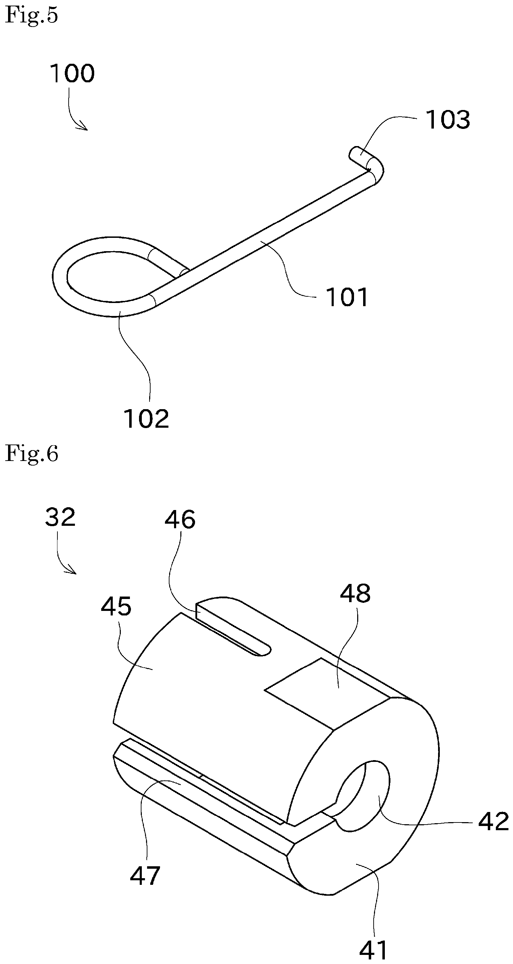

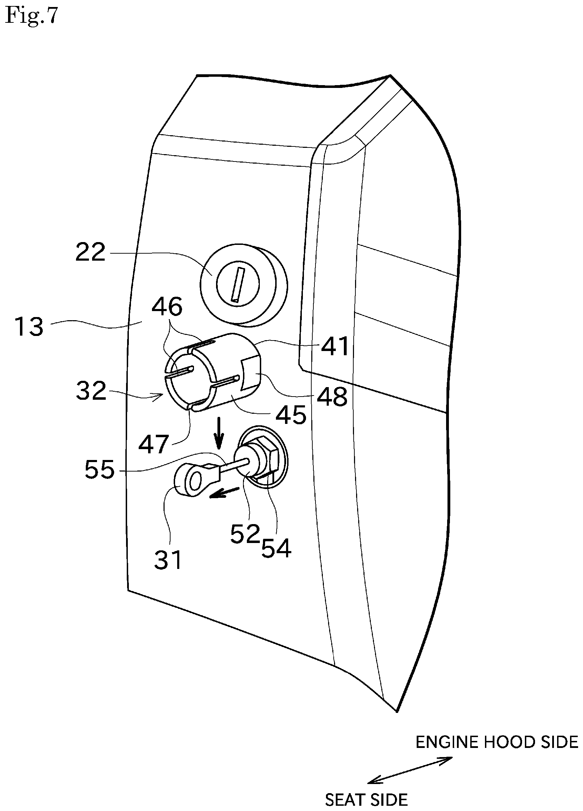

Next, the following describes a structure and an operation method of the unlock unit 23. FIG. 3 is an enlarged perspective view of a vicinity of the unlock unit 23. FIG. 4 is a perspective view showing an operation of a release operation unit 31 of the unlock unit 23 by using a release tool 100. FIG. 5 is a perspective view of the release tool 100. FIG. 6 is a perspective view showing a bottom surface portion 41 of a surrounding member 32. FIG. 7 is a perspective view showing attaching of the surrounding member 32.

As shown in FIG. 3, the unlock unit 23 includes the release operation unit 31 and the surrounding member 32. The release operation unit 31 is connected to the lock unit 60 through a wire (connecting member) 55, as shown in FIG. 1 and the like. An end portion of the release operation unit 31 on one side (driver seat side, a side opposite to the engine hood 5) has a hook hole 31a. The hook hole 31a is formed so that its axial direction is perpendicular to the direction in which the surrounding member 32 protrudes. As shown in FIG. 4, locking of the lock unit 60 can be released by pulling the hook hole 31a of the release operation unit 31 in a direction to the closer side (towards the driver seat, to one side of the release operation unit 31 relative to its longitudinal direction) with use of a release tool 100 (detailed later).

The surrounding member 32 is a bottomed cylindrical member provided in such a manner as to protrude from the column cover 12 towards the driver seat, and is arranged to cover the periphery of the release operation unit 31. As shown in FIG. 3, a driver seat side end portion of the surrounding member 32 is opened. Further, as shown in FIG. 6, an engine hood side end portion of the surrounding member 32 is partially closed (a bottom surface is formed). The axial direction (direction of the center axis of the cylindrical shape) of the surrounding member 32 is the same as an operation direction (pull direction) of the release operation unit 31.

The release tool 100 is formed by bending a rod-like member. As shown in FIG. 5, the release tool 100 includes a main part 101, a grip part 102, and a hook part 103. The grip part 102 is connected to the main part 101. The grip part 102 is an annular part formed by bending the rod-like member. The driver grips the grip part 102 when using the release tool 100. The hook part 103 is a part formed by bending the rod-like member substantially 90 degrees. The hook part 103 is a portion to be hooked to the hook hole 31a of the release operation unit 31. Thus, the driver grips the grip part 102 of the release tool 100, hooking the hook part 103 to the hook hole 31a of the release operation unit 31, and pull the release tool 100 towards the driver seat. This releases locking of the lock unit 60.

The surrounding member 32 is a member that deters the release operation unit 31 from being easily operated. Specifically, it is a member that deters the engine hood 5 from being opened by an unintended person without permission. To this end, the surrounding member 32 has a gap between the surrounding member 32 and the release operation unit 31 such that the release operation unit 31 cannot be operated by a hand, and that the release operation unit 31 can be operated with the release tool 100, by inserting the release tool 100 into the gap between the release operation unit 31 and the surrounding member 32. For example, the distance between the release operation unit 31 and the surrounding member 32 is preferably a distance that does not allow a finger to be inserted; however, the distance may be a distance that allows insertion of a finger to a certain extent, but does not allow operation by the finger (e.g., a structure that does not allow hooking a finger to the hook hole 31a, even if the finger is bent). Further, the surrounding member 32 is arranged so that the release operation unit 31 (particularly, the hook hole 31a) does not protrude from the surrounding member 32.

As shown in FIG. 3 and FIG. 6, the surrounding member 32 has a bottom surface portion 41 and a side surface portion 45.

The bottom surface portion 41 is a portion corresponding to a bottom surface of the cylindrical shape and is an engine hood side (dashboard 13 side) end portion. In the bottom surface portion 41, an attachment hole 42 for attaching the surrounding member 32 to the dashboard 13 is formed. In this attachment hole 42, a screw groove is formed.

The side surface portion 45 is a part corresponding to the cylindrical shape, and is a part that covers the release operation unit 31. The side surface portion 45 has short slits 46, a long slit 47, and flat portions 48. The short slits 46 are each a slit extending from the driver seat side end portion of the side surface portion 45 to a midway portion of the side surface portion 45. The short slits 46 are formed in three positions of the side surface portion 45. The long slit 47 is a slit extending from the driver seat side end portion to the engine hood side end portion of the side surface portion 45. The long slit 47 is formed in a single position of the side surface portion 45. The distances among the short slits 46 and the long slit 47 are substantially constant (i.e., any of the slits is formed at every 90 degrees). Further, the outer side end surfaces defining the long slit 47 are chamfered, as shown in FIG. 6. The flat portions 48 are each a part that is formed nearby the engine hood side end portion of the side surface portion 45 and is flat. The flat portions 48 are provided in two positions facing each other. The long slit 47 and the flat portions 48 are used at a time of attaching the surrounding member 32.

Specifically, the surrounding member 32 is attached as shown in FIG. 7 after the release operation unit 31, the wire 55, and the like are installed. However, since the attachment hole 42 in the bottom surface portion 41 of the surrounding member 32 is smaller than the release operation unit 31, the surrounding member 32 cannot be attached in the axial direction. Instead, the release operation unit 31 is pulled to expose the wire 55 as shown in FIG. 7. Then, the surrounding member 32 is attached in a radial direction. At this time, a portion of the surrounding member 32 where the long slit 47 is formed is brought closer to the release operation unit 31. This way, the wire 55 passes through the long slit 47, and the release operation unit 31 can be positioned inside the surrounding member 32. It should be noted that the chamfered portions of the end surfaces defining the long slit 47 serve as a guide at a time of attaching the surrounding member 32. More specifically, even in a case where the position of the wire 55 and the position of an opening portion of the long slit 47 do not match with each other, if the wire 55 contacts the chamfered portion (sloped surface), the wire 55 can be easily moved to the opening portion of the long slit 47 along the chamfered portion. Further, to facilitate the wire 55 to pass through the long slit 47, the width of the long slit 47 (a length in a direction perpendicular to the longitudinal direction of the long slit 47, a length along the circumference) is wider than the width of the wire 55 (a length in a radial direction of the wire 55, a length in a direction perpendicular to the longitudinal direction of the wire 55, a length in a direction perpendicular to the direction in which the surrounding member 32 protrudes). Further, to deter operation of the release operation unit 31 through the long slit 47 after the surrounding member 32 is attached, the width of the long slit 47 is smaller than the width of the release operation unit 31 (a length in a direction perpendicular to the longitudinal direction of the release operation unit 31, a length in a direction perpendicular to the direction in which the surrounding member 32 protrudes). Then, the pair of flat portions 48 are clamped by a tool and rotated so that the surrounding member 32 can be attached to the dashboard 13 (details of which will be described later).

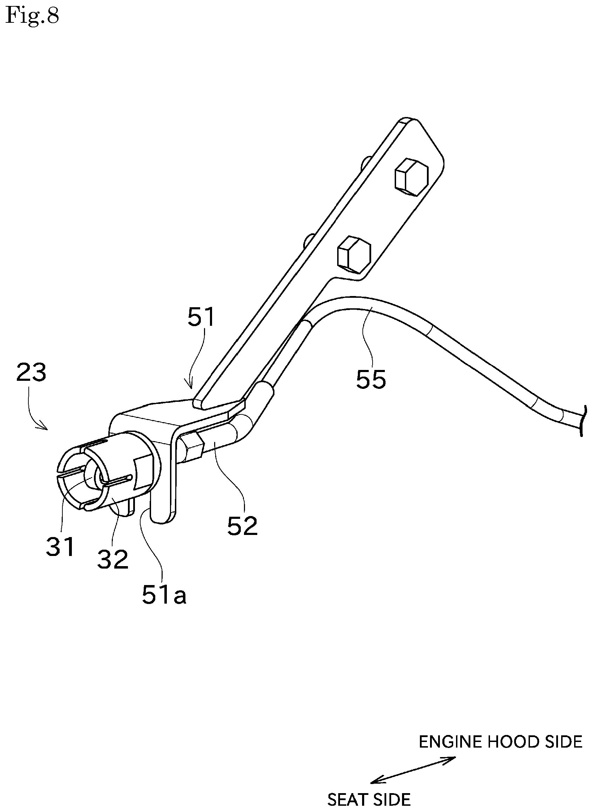

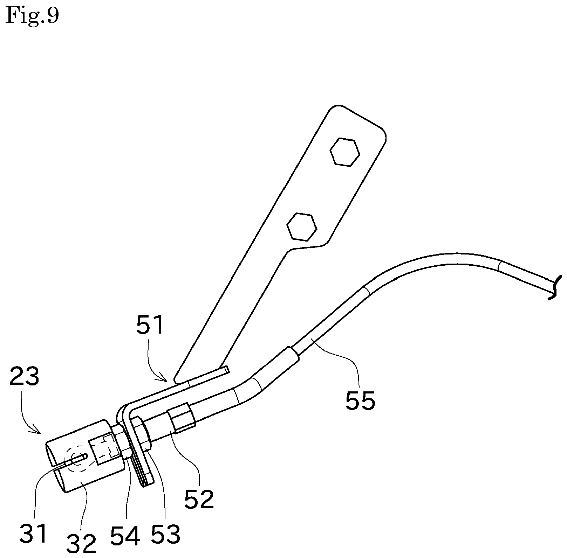

Next, an attachment structure of the unlock unit 23 is described. FIG. 8 is a perspective view showing an attachment structure of the unlock unit 23. FIG. 9 is a side view showing the attachment structure of the unlock unit 23.

As shown in FIG. 8 and FIG. 9, the unlock unit 23 has, on its engine hood side, a support bracket 51, a pipe shaft 52, and nuts 53, 54.

One side (driver seat side) end portion of the support bracket 51 has a cut-out portion 51a. The unlock unit 23 is attached to this cut-out portion 51a. The other (engine hood side) end portion of the support bracket 51 is attached to another member (detailed later).

The pipe shaft 52 is a cylindrical member in which a through hole is formed. The wire 55 passes through the inside of the pipe shaft 52. Further, a screw groove is formed on an outer surface of the pipe shaft 52. The pipe shaft 52 is attached to the support bracket 51 by being inserted into the cut-out portion 51a of the support bracket 51 and fastened by the nuts 53, 54 from both sides relative to its longitudinal direction. Further, to a driver seat side end portion of the pipe shaft 52, the surrounding member 32 is attached by using the attachment hole 42.

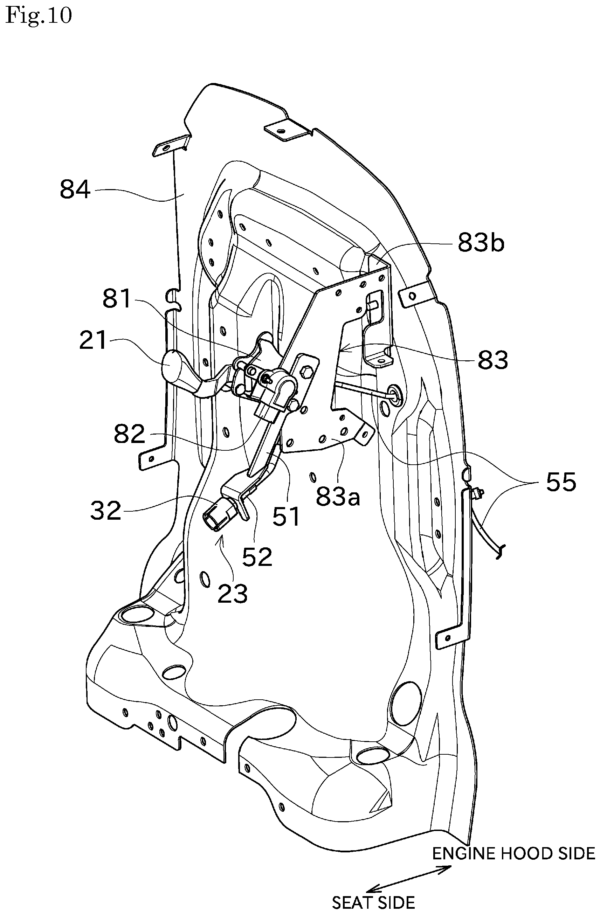

Next, an attachment structure of the support bracket 51 is described with reference to FIG. 10. FIG. 10 is a perspective view showing an attachment structure of the support bracket 51. As shown in FIG. 10, the support bracket 51 is attached to a shielding plate (air cut plate) 84 through a connection plate 83. To the connection plate 83, a lever support bracket 81 for supporting the accelerator lever 21 is attached in addition to the support bracket 51.

The following describes specifically a structure and a positional relationship of each member. To the lever support bracket 81, the accelerator lever 21, and a potentiometer 82 configured to detect the rotation angle of the accelerator lever 21 are attached.

The connection plate 83 includes a first attaching part 83a and a second attaching part 83b. The first attaching part 83a is structured so that its thickness direction matches with a right-left direction. The support bracket 51 is arranged on one side (right side) of the first attaching part 83a relative to its thickness direction, and the lever support bracket 81 is arranged on the other side (left side) of the first attaching part 83a relative to its thickness direction. The first attaching part 83a, the support bracket 51, and the lever support bracket 81 are arranged so that positions of their mounting holes match with one another, and are attached (jointly fastened) together by a fixing member such as a bolt. Further, the second attaching part 83b is substantially perpendicular to the first attaching part 83a (specifically, the thickness direction thereof matches with a front-rear direction), and is attached to a shielding plate 84 by a fixing member such as a bolt.

The shielding plate 84 is a plate member that partitions the driver seat side from the interior of the engine hood 5 serving as the engine room. Specifically, the engine hood 5 structured to be rotatable has its rear end opened, and the shielding plate 84 is arranged so as to close this opened part of the engine hood 5. This way, the shielding plate 84 suppresses or reduces propagation of engine heat (heat in the interior of the engine hood 5), noise, and the like to the driver seat side (i.e., shields the heat and noise). Further, the shielding plate 84 has a plurality of through holes for passing a harness, a wire for transmitting an operation force, and the like. Through one of these through holes, the wire 55 is guided to a front portion of the engine hood 5.

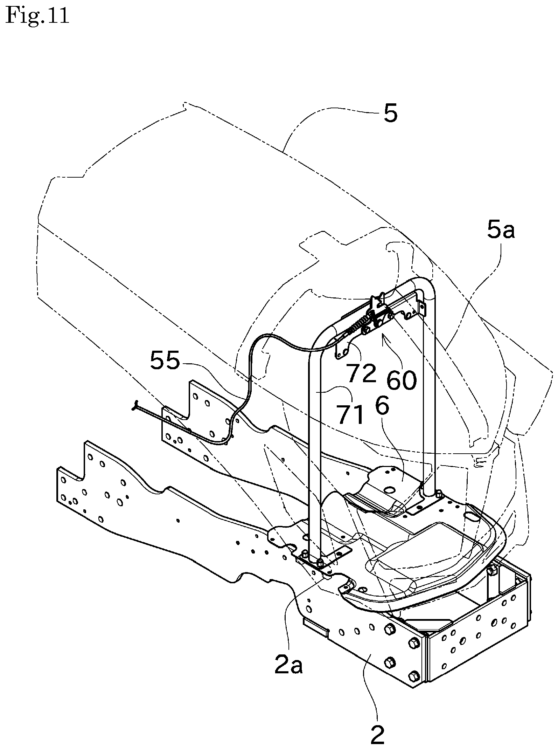

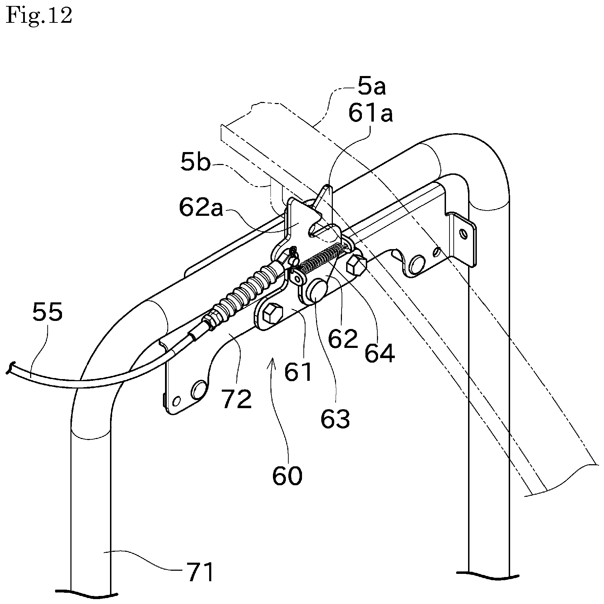

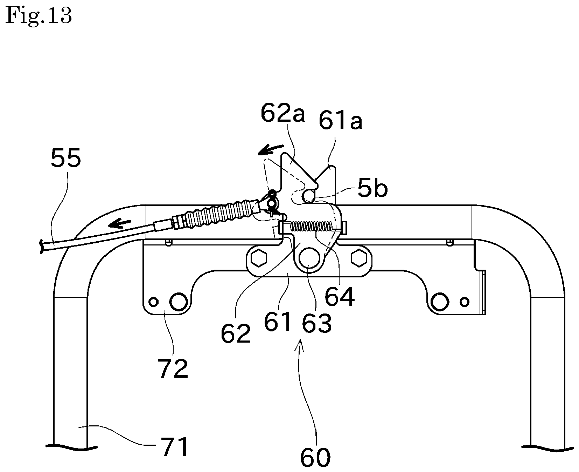

Next, a structure of the lock unit 60 is described with reference to FIG. 11 to FIG. 13. FIG. 11 is a perspective view showing an attachment structure of the front frame 71. FIG. 12 is a perspective view showing a structure of the lock unit 60. FIG. 13 is a front view showing a structure of the lock unit 60.

As shown in FIG. 11, the machine body 2 has a pair of right and left attachment plate support parts 2a each of which is a plate-like member arranged so as to face upward (the thickness direction matches with an up-down direction). In the attachment plate support parts 2a, not-shown attachment holes are formed. On top surfaces of these attachment plate support parts 2a, an attachment plate 6 is attached by using the attachment holes and fixing members such as bolts. This way, the machine body 2 (attachment plate support parts 2a) supports the attachment plate 6.

On a top surface of the attachment plate 6, a not-shown battery, a not-shown radiator, and the like are mounted. Further, on the top surface of the mounting plate 6, the front frame 71 is attached, as shown in FIG. 11. The front frame 71 is a frame arranged in the interior of the engine hood 5, and is arranged forward of the center of the engine hood 5 relative to the front-rear direction. The front frame 71 has a substantially U-shape. Specifically, the front frame 71 has two members extended in the up-down direction, and a single member connecting these two members and extending in the right-left direction. To the member extending in the right-left direction, a support plate 72 to which the lock unit 60 is attached and supported is attached.

As shown in FIG. 11 and FIG. 12, an engine hood frame 5a is arranged in the interior of the engine hood 5. The engine hood frame 5a is fixed to an interior wall on the upper side of the engine hood 5. Below the engine hood frame 5a, a lock bar 5b is arranged. The lock unit 60 locks the engine hood 5 by holding the lock bar 5b.

The lock unit 60 has a first lock plate 61, a second lock plate 62, a rotation pin 63, and a biasing spring 64.

The first lock plate 61 is non-rotatably attached to the support plate 72. The second lock plate 62 is rotatably attached to the first lock plate 61 by the rotation pin 63. The first lock plate 61 has a cut-out portion 61a in which the lock bar 5b is fitted. The second lock plate 62 has a hook part 62a that restricts the lock bar 5b fitted in the cut-out portion 61a from moving upward. Further, the biasing spring 64 is attached so as to connect the first lock plate 61 and the second lock plate 62. The biasing spring 64 biases the first lock plate 61 and the second lock plate 62 in directions so that the hook part 62a approaches the cut-out portion 61a.

With this structure, the cut-out portion 61a and the hook part 62a hold the lock bar 5b while no external force is applied, and therefore the engine hood 5 is deterred from being opened. Further, the second lock plate 62 is connected to the wire 55. When the release operation unit 31 is pulled towards the driver seat as described above, the wire 55 is pulled leftward of FIG. 13 (in such a manner that the hook part 62a departs from the cut-out portion 61a). This way, the second lock plate 62a biased by the biasing spring 64 rotates, and the hook part 62a departs from the cut-out portion 61a. This releases the lock bar 5b, and hence unlocks the engine hood 5 locked by the lock unit 60. The driver can open the engine hood 5 by lifting the engine hood 5 with a hand, and perform maintenance and the like.

In the interior of the engine hood 5, there are a plurality of gas dampers which connect a member that rotates along with rotation of the engine hood 5 and a member that does not rotate even when the engine hood 5 rotates. With this, the driver can smoothly open or close the engine hood 5, while locking of the lock unit 60 is released.

As hereinabove described, the tractor 1 of the present embodiment includes an engine hood 5, a lock unit 60, a release operation unit 31, and a surrounding member 32. The lock unit 60 deters the engine hood 5 from being opened. The release operation unit 31 is arranged in a column cover 12 or a dashboard 13 of a driver seat, and connected to the lock unit 60 through a wire 55 to allow an operation of releasing locking of the lock unit 60. The surrounding member 32 is provided to protrude from the column cover 12 or the dashboard 13 and surrounds the circumference of the release operation unit 31 so as to disable direct manual operation of the release operation unit 31 by a driver, the surrounding member 32 having an opening portion that allows insertion of at least a predetermined release tool 100.

Surrounding the release operation unit 31 with the surrounding member 32 can deter easy unlocking of the engine hood 5. Further, since the release operation unit 31 is provided to the column cover 12 or the dashboard 13, a driver can unlock the engine hood 5 in a non-straining posture.

The tractor 1 of the present embodiment is such that locking of the lock unit 60 is released by pulling the release operation unit 31 in an axial direction of the surrounding member 32.

This way, the engine hood 5 can be unlocked through a simple operation.

The tractor 1 of the present embodiment is such that the surrounding member 32 has a cylindrical shape.

Unlocking the engine hood 5 by pulling the release operation unit 31 only requires a gap that enables insertion of the release tool 100 between the release operation unit 31 and the surrounding member 32. If the surrounding member 32 has a polygonal shape, the gap between the surrounding member 32 and the release operation unit 31 tends to be large at a corner of the polygonal shape, consequently making manual unlocking easier. However, the gap between the release operation unit 31 and the surrounding member 32 can be made even to a certain extent by making the surrounding member 32 in a cylindrical shape. Therefore, a structure that deters manual unlocking while allowing unlocking by using the release tool 100 can be easily achieved.

Further, in the tractor 1 of the present embodiment, the release operation unit 31 has a hook hole 31a that can be hooked by the release tool 100. An axial direction of the hook hole 31a and the direction in which the surrounding member 32 protrudes are perpendicular to each other.

With the hook hole 31a inside the surrounding member 32, a finger cannot hook to the hook hole 31a unless the finger is bent inside the surrounding member 32. Therefore, a structure that deters manual unlocking while allowing unlocking by using a release tool 100 can be easily achieved.

Further, in the tractor 1 of the present embodiment, the surrounding member 32 has a long slit 47 extended in the direction in which the surrounding member 32 protrudes. A width of the long slit 47 is smaller than a width of the release operation unit 31, but is larger than a width of the wire 55.

With this, the wire 55 and the release operation unit 31 can be attached first, and the surrounding member 32 can be attached thereafter. Specifically, when the surrounding member 32 is attached, the release operation unit 31 is pulled to draw out the wire 55, and then the surrounding member 32 can be attached afterward by letting the wire 55 pass through the slit of the surrounding member 32.

Although a preferred embodiment of the present invention has been described above, the above-described configuration can be modified, for example, as follows.

The surrounding member 32 is not limited to a cylindrical shape, and the opening portion may be a tube having a polygonal shape (triangular shape or quadrangular shape). In this case, the axial direction refers to a line passing substantially the center of the opening portion. Further, the number of slits and the length thereof are not limited to the above embodiment. For example, the short slit 46 does not have to be formed. Further, a plurality of long slits 47 may be provided.

The unlock unit 23 may be arranged in the column cover 12 instead of the dashboard 13. Further, the position of the unlock unit 23 is not limited to the one described in the above embodiment. For example, the unlock unit 23 may be above the accelerator lever 21 or the key cylinder 22, or on the left side of the steering wheel 24. Further, the connecting member connecting the release operation unit 31 and the lock unit 60 is not limited to a member structured to transmit power, and may be an electric wire configured to transmit an electric signal.

In the above embodiment, locking of the lock unit 60 is released by performing an operation (releasing operation) of pulling the release operation unit 31 to the closer side (rearward, towards the driver seat). However, locking of the lock unit 60 may be released by a different release operation. For example, the release operation may be an operation of pressing the release operation unit towards a far side (front side, towards the engine hood). Further, the release operation may be an operation involving sliding in a right-left direction or in an up-down direction (a direction perpendicular to the longitudinal direction of the wire). In such a case, the shape of the surrounding member needs to be different from that of the above embodiment.

The surrounding member 32 may be attached by a method other than screwing (e.g., bonding by welding, riveting, and the like). Screwing as in the present embodiment facilitates attachment and detachment of the surrounding member 32. Therefore, for example, by removing the surrounding member 32 at a time of maintenance, the engine hood 5 can be opened without use of the release tool 100. Attaching the surrounding member 32 again after the maintenance deters an unintended person from opening the engine hood 5 easily (without use of a tool).

In the above embodiment, the lock unit 60 is arranged nearby the upper end portion of the engine hood 5; however, may be arranged in a different position (e.g., nearby a front end portion of the engine hood 5).

The tractor 1 of the above embodiment is of a type in which the driver seat 11, the steering wheel 24, and the like are exposed to the exterior. However, the present invention is also applicable to a tractor whose driver seat 11, steering wheel 24, and the like are covered by a cabin. If a door of the cabin has a lock function, an unintended person cannot easily access the release operation unit 31. Additionally providing the surrounding member 32 can further improve the effect of deterring an unintended person from easily opening the engine hood 5.

### Reference Signs List

- 1: tractor
- 23: unlock unit
- 31: release operation unit
- 32: surrounding member
- 47: long slit (attachment slit)
- 55: wire (connecting member)
- 60: lock unit

## Claims

1. A tractor comprising:
an engine hood (5);
a lock unit (60) configured to deter the engine hood from being opened;
a release operation unit (31) arranged in a column cover (12) or a dashboard (13) of a driver seat, and connected to the lock unit (60) through a connecting member (55) to allow an operation of releasing locking of the lock unit (60); and
a surrounding member (32) provided to protrude from the column cover (12) or the dashboard (13), and
the surrounding member (32) is a bottomed cylindrical member provided in such a manner as to protrude from the column cover (12) towards the driver seat, and is arranged to cover the periphery of the release operation unit (31), and surrounding the circumference of the release operation unit (31) so as to disable direct manual operation of the release operation unit, the surrounding member (32) having an opening portion that allows insertion of at least a predetermined release tool, wherein
a driver seat side end portion of the surrounding member (32) is opened.

2. The tractor according to claim 1, wherein:
locking of the lock unit (60) is released by pulling the release operation unit (31) in an axial direction of the surrounding member (32).

3. The tractor according to claim 2, wherein
the surrounding member (32) has a cylindrical shape.

4. The tractor according to claim 2, wherein:
the release operation unit (31) has a hook hole (31a) that can be hooked by the release tool (100); and
an axial direction of the hook hole (31a) and a direction in which the surrounding member (32) protrudes are perpendicular to each other.

5. The tractor according to claim 2, wherein:
the surrounding member (32) has an attachment slit (47) extended in a direction in which the surrounding member (32) protrudes; and
a width of the attachment slit (47) is smaller than a width of the release operation unit (31), but is larger than a width of the connecting member (55).

## Patentansprüche

1. Traktor, umfassend:
eine Motorhaube (5);
eine Verriegelungseinheit (60), die konfiguriert ist, um zu verhindern, dass die Motorhaube geöffnet wird;
eine Entriegelungsbetätigungseinheit (31), die in einer Lenksäulenverkleidung (12) oder einem Armaturenbrett (13) eines Fahrersitzes angeordnet und mit der Verriegelungseinheit (60) über ein Verbindungselement (55) verbunden ist, um einen Vorgang der Entriegelung der Verriegelung der Verriegelungseinheit (60) zu ermöglichen; und
ein Umfassungselement (32), das so vorgesehen ist, dass es aus der Lenksäulenverkleidung (12) oder dem Armaturenbrett (13) hervorsteht, und
wobei das Umfassungselement (32) ein mit einem Boden versehenes zylindrisches Element ist, das so vorgesehen ist, dass es von der Lenksäulenverkleidung (12) in Richtung des Fahrersitzes hervorsteht, und so angeordnet ist, dass es die Peripherie der Entriegelungsbetätigungseinheit (31) abdeckt und den Umfang der Entriegelungsbetätigungseinheit (31) umfasst, um eine direkte manuelle Betätigung der Entriegelungsbetätigungseinheit zu verhindern, wobei das Umfassungselement (32) einen Öffnungsabschnitt aufweist, der das Einführen von mindestens einem vorbestimmten Entriegelungswerkzeug ermöglicht, wobei
ein fahrersitzseitiger Endabschnitt des Umfassungselements (32) geöffnet ist.

2. Traktor nach Anspruch 1, wobei:
die Verriegelung der Verriegelungseinheit (60) durch Ziehen der Entriegelungsbetätigungseinheit (31) in einer axialen Richtung des Umfassungselements (32) entriegelt wird.

3. Traktor nach Anspruch 2, wobei
das Umfassungselement (32) eine zylindrische Form aufweist.

4. Traktor nach Anspruch 2, wobei:
die Entriegelungsbetätigungseinheit (31) ein Hakenloch (31a) aufweist, in welches das Entriegelungswerkzeug (100) eingehakt werden kann; und
eine axiale Richtung des Hakenlochs (31a) und eine Richtung, in der das Umfassungselement (32) hervorsteht, senkrecht zueinander stehen.

5. Traktor nach Anspruch 2, wobei:
das Umfassungselement (32) einen Befestigungsschlitz (47) aufweist, der sich in einer Richtung erstreckt, in der das Umfassungselement (32) hervorsteht; und
eine Breite des Befestigungsschlitzes (47) kleiner ist als eine Breite der Entriegelungsbetätigungseinheit (31), aber größer ist als eine Breite des Verbindungselements (55).

## Revendications

1. Tracteur comprenant :
un capot de moteur (5) ;
une unité de verrouillage (60) conçue pour empêcher l'ouverture du capot de moteur ;
une unité d'opération de libération (31), disposée dans un fourreau de direction (12) ou dans un tableau de bord (13) d'un siège de conducteur et reliée à l'unité de verrouillage (60) par un élément de liaison (55) pour permettre l'opération de libération du verrouillage de l'unité de verrouillage (60) ; et
un élément périphérique (32), conçu pour faire saillie à partir du fourreau de direction (12) ou du tableau de bord (13) et
l'élément périphérique (32) est un élément cylindrique abaissé, conçu pour faire saillie à partir du fourreau de direction (12) vers le siège de conducteur et pour couvrir la périphérie de l'unité d'opération de libération (31) et entourant la circonférence de l'unité d'opération de libération (31) afin de désactiver toute opération manuelle directe de l'unité d'opération de libération, l'élément périphérique (32) présentant une partie d'ouverture permettant l'insertion d'au moins un outil de libération prédéterminé, dans lequel
une partie d'extrémité côté siège de conducteur de l'élément périphérique (32) est ouverte.

2. Tracteur selon la revendication 1, dans lequel :
le verrouillage de l'unité de verrouillage (60) est libéré par traction de l'unité d'opération de libération (31) selon une direction axiale de l'élément périphérique (32).

3. Tracteur selon la revendication 2, dans lequel :
l'élément périphérique (32) présente une forme cylindrique.

4. Tracteur selon la revendication 2, dans lequel :
l'unité d'opération de libération (31) comporte un trou de crochet (31a) accrochable par l'outil de libération (100) ; et
une direction axiale du trou de crochet (31 a) et une direction de saillie de l'élément périphérique (32) sont perpendiculaires.

5. Tracteur selon la revendication 2, dans lequel :
l'élément périphérique (32) comporte une fente de fixation (47) suivant une direction de saillie de l'élément périphérique (32) ; et
une largeur de la fente de fixation (47) est plus petite qu'une largeur de l'unité d'opération de libération (31) mais plus grande qu'une largeur de l'élément de liaison (55).
